# EUROPÄISCHE PATENTSCHRIFT

(11) **EP 1 363 080 B1**
(45) Veröffentlichungstag und Bekanntmachung des Hinweises auf die Patenterteilung: **19.11.2008**
(21) Anmeldenummer: 03011230.4
(22) Anmeldetag: 16.05.2003
(51) Int. Cl.: F24D 11/00, F24D 19/10, G05D 23/19

(54) **Betriebsverfahren für eine Gebäudeheizvorrichtung**
Method of operating a heating system for a building
Procédé de fonctionnement pour installation de chauffage d'un bâtiment

(30) Priorität: 16.05.2002 DE 10221852
(43) Veröffentlichungstag der Anmeldung: 19.11.2003
(73) Patentinhaber: Heckmeier, Josef, 85301 Sünzhausen (DE)
(72) Erfinder: Heckmeier, Josef, 85301 Sünzhausen (DE)
(74) Vertreter: Grünecker, Kinkeldey, Stockmair & Schwanhäusser Anwaltssozietät

(56) Entgegenhaltungen:
- EP-A- 0 455 184
- EP-A- 0 544 197
- DE-A- 2 904 737
- DE-A- 19 749 764
- GB-A- 1 482 150
- US-A- 4 505 259

## Beschreibung

Die vorliegende Erfindung betrifft ein Betriebsverfahren für eine Gebäudeheizvorrichtung gemäß dem Oberbegriff von Anspruch 1 sowie eine Gebäudeheizvorrichtung nach dem Oberbegriff von Anspruch 11.

Solche Gebäudeheizvorrichtungen sind im Stand der Technik bestens bekannt und weitverbreitet im Einsatz. Üblicherweise wird z.B. bei einem Einfamilienhaus als Heizquelle ein gas- oder ölbefeuerter Heizkessel verwendet, der einen Warmwasserheizkreislauf erwärmt. In diesem Warmwasserheizkreislauf ist sehr häufig ein Warmwasserspeicher integriert, der zum einen über einen Wärmetauscher für die Brauchwassererwärmung des Wohngebäudes und zum anderen für das Versorgen des Heizkreislaufs mit Speicherwärme für vorbestimmte Zeitabschnitte sorgt, ohne dass der Heizkessel in Betrieb ist. Zusätzlich sind in solchen Gebäudeheizvorrichtungen oftmals noch Regenerative Heizquellen, wie Wärmepumpen (Energiegewinnung aus Luft, Wasser oder Erdreich) oder Solarkollektoren (Energiegewinnung aus Sonnenstrahlung) etc., integriert, die ebenfalls Wärme in den Heizkreislauf, einschließlich dem Wärmespeicher, einspeisen. Bei diesen Regenerativen Heizquellen hängt die Einspeisung von Wärme sehr stark von den äußeren Gegebenheiten, z.B. von der Sonnenstrahlung, ab. Solche Regenerative Heizquellen erzeugen oftmals dann besonders viel Wärme, wenn die Sollwerttemperaturen in den einzelnen Räumen des Gebäudes bereits erreicht und der Wärmespeicher bereits einen hohe Ladegrad aufweist. Um dennoch diese Wärme speichern zu können, ist es bekannt, zusätzliche Wärmespeicher in den Heizkreislauf zu integrieren. Diese zusätzlichen Wärmespeicher mit Schichteinrichtung oder mit speziellen wärmespeichemden Medien sind relativ teuer, weshalb sehr schnell an die Grenzen des wirtschaftlichen Nutzens solcher aufgerüsteten Anlagen gestoßen wird. Unter Wärmespeicher ist in diesem Zusammenhang auch ein Brauchwasser-Speicher zu verstehen, der über einen Wärmetauscher mit dem Heizkreislauf in Verbindung steht.

Aus der DE-A-2904737 ist ein Betriebsverfahren für eine Gebäudeheizvorrichtung gemäß dem Oberbegriff von Anspruch 1 bekannt. Dieses Betriebsverfahren verfügt über eine Nachtabsenkung, wobei zum Ende der Nachtabsenkung über eine Temperatursteuer- und -regelung der Temperatursollwert für eine Raumzone erhöht wird. Zu Beginn der Nachtabsenkung gibt die Raumzone entsprechend Wärme wieder ab.

Es ist daher eine Aufgabe der vorliegenden Erfindung, ein Betriebsverfahren für eine Gebäudeheizvorrichtung bereitzustellen, das zu einer effektiveren Ausnutzung der vorhandenen Heizquellen führt.

Erfindungsgemäß ist hierzu ein Betriebsverfahren gemäß Anspruch 1 vorgesehen .

Das bedeutet, dass eine bestehende Heizvorrichtung, wenn sie mit diesem neuartigen Betriebsverfahren betrieben wird, zu einer effektiveren Ausnutzung der Wärmespeichermöglichkeiten führt. Bei bislang vorhandenen Heizvorrichtungen wird stur nach dem Temperatursollwert der einzelnen Raumzonen gesteuert oder geregelt, und sobald dieser Temperaturwert erreicht wird, wird auch die Wärmeeinbringung in diese Raumzone so eingestellt, dass diese Temperatur nicht überschritten wird. Bislang erfolgt die Temperatursollwerteinstellung in aller Regel immer nach dem persönlichen Empfinden, der diese Raumzone nutzenden Personen. Jedes Gebäude weist jedoch Raumzonen auf, die entweder weniger genutzt werden oder bei denen eine Temperaturerhöhung nicht unangenehm auffällt, z.B. Badezimmer, Kellervorraum etc. Der für diese zusätzliche Wärmespeicheraktivierung zuständige Betriebszustand lässt sich durch alle möglichen Heizungsparameter definieren. Denkbar wäre hierbei das Erreichen bestimmter Außentemperaturen, das Erreichen eines bestimmten Ladegrades bei einem herkömmlichen Wärmespeicher etc. Es kommt nicht darauf an, den Temperatursollwert in der Raumzone unmittelbar zu überwachen bzw. in die Steuerung und/oder Regelung mit einzubeziehen. Demnach ist es vollkommen ausreichend, wenn z.B. die Vorlauftemperatur des Heizkreislaufs bzw. des der Raumzone zugeordneten Heizelementes zu diesem Zwecke herangezogen wird.

Der ausgewählte Betriebszustand zum Aktivieren der mindestens einen Raumzone als Wärmespeicher ist eine Wärmeüberproduktion mindestens einer Heizquelle. Ein solcher Betriebszustand dürfte in aller Regel dann auftauchen, wenn Regenerative Heizquellen in den Heizkreislauf integriert sind, die zu solch einer Wärmeüberproduktion fähig sind, ohne dass hierzu fossile Brennstoffe verbraucht werden müssen. Nimmt man z.B. an, dass in sämtlichen Raumzonen der eingestellte Temperatursollwert erreicht und/oder etwa ein vorhandener Wärmespeicher ebenso seinen kompletten Ladegrad erreicht hat, so würde normalerweise eine Regenerative Heizquelle keinen zusätzlichen Nutzen mehr bringen. Nunmehr besteht die Möglichkeit, durch gezielte Auswahl einer oder mehrerer Raumzonen trotzdem noch Wärme in das Gebäude hineinzupumpen. Bevorzugt werden hierzu Raumzonen ausgewählt, die weniger frequentiert sind und daher die Erhöhung der Temperaturen in diesen Raumzonen weniger auffällt oder sogar als angenehm (Badezimmer) empfunden wird. Im Prinzip besteht hier die Möglichkeit, die zusätzliche Wärmeeinbringung gemäß einer Rangliste vorzunehmen oder jeweils von einem zusätzlichen Raumzonenspeicher zum anderen und wieder zurückzuschalten, um immer nur kleine Temperaturerhöhungen zu bewirken. Hierzu sei angemerkt, dass bei üblichen Raumhöhen die Erhöhung der Temperatur um 1°C pro m² Raumfläche der Heizleistung von 100 Litern Heißwasser bei 60°C entspricht. Hieraus lässt sich erkennen, dass solche Raumzonen beträchtliche Speicherkapazitäten aufweisen und als quasi vorhandener Speicher kostenlos zur Verfügung stehen. Die Effektivität von Regenerativen Heizquellen lässt sich durch ein solches Betriebsverfahren beträchtlich steigern. Während also z.B. tagsüber zusätzliche Wärme eines Sonnenkollektors in eine oder mehrere Raumzonen zusätzlich eingebracht wird, kann sich diese Wärme in der Nacht auch auf angrenzende Raumzonen übertragen, und dafür sorgen, dass durch fossile Brennstoffe beheizte Heizkessen nicht nachhelfen müssen. In Badezimmern können hierdurch z.B. auch noch morgens sehr angenehme Temperaturen bereitgestellt werden, ohne dass nachts zusätzlich über einen Heizkessel beheizt werden muss.

Als Heizquelle im Sinne dieser Erfindung kann auch ein Blockheizkraftwerk (BHKW) eingesetzt werden. Besonders eigenen sich bezüglich ihres Leistungsbereichs einstellbare BHKW's. Bei Hoch- und Volllastbetrieb eines BHKW's z.B. zu Stromspitzenzeiten kann das BHKW einen größeren Anteil an der Gesamtwärmeversorgung des Gebäudes übernehmen.

Als sehr günstig hat sich bei einer weiteren Variante herausgestellt, wenn bei Wärmeüberproduktion zuerst der permanente Wärmespeicher beladen und anschließend die mindestens eine Raumzone als Zusatzwärmespeicher aktiviert wird. Das bedeutet, dass die Gebäudeheizvorrichtung wie bislang bekannte Gebäudeheizvorrichtungen auch gesteuert bzw. geregelt wird und erst bei Erreichen der Kapazitätsgrenze (hier vollständig beladener permanenter Wärmespeicher) eine Aktivierung der Raumzonen als Zusatzwärmespeicher erfolgt.

Des Weiteren kann vorgesehen sein, dass bei Aktivierung der mindestens einen Raumzone als Wärmespeicher die Vorlauftemperatur des mindestens einen Heizelementes erhöht wird. Oftmals wird bei reinen Witterungs- oder raumgeführten Vorlauftemperaturregelungen die Soll-Vorlauftemperatur bei steigender Außentemperatur bzw. bei Erreichen der Raumsollwerttemperatur auf einen relativ niedrigen Wert geregelt. Hierdurch ist es nunmehr sehr schwierig, ausreichende Wärmemengen in den Heizkreislauf, insbesondere bei Wärmeüberschuss, hineinzupumpen. Dies kann durch die Erhöhung der Vorlauftemperatur in Durchbrechung der übergelagerten Steuerung bzw. Regelung für den Fall, dass eine Raumzone als Wärmespeicher aktiviert ist bzw. wird, erreicht werden.

Bevorzugt kann eine programmierbare Temperatursteuer- und/oder Regelung vorgesehen sein, die automatisch bei Eintreten des ausgewählten Betriebszustandes die mindestens eine Raumzone als Wärmespeicher aktiviert. Zwar ist es auch denkbar, dass durch einfache Anzeige den Benutzern mitgeteilt wird, dass der bestimmte Betriebszustand erreicht und nunmehr der Temperatursollwert für eine bestimmte Raumzone erhöht werden müsste. Viel bedienungsfreundlicher ist es jedoch, wenn sämtliche Vorgänge von einer programmierbaren Steuerung bzw. Regelung vorgenommen werden. Hier könnten auch die verschiedensten Parameter für den ausgewählten Betriebszustand eingestellt, sowie die Raumzonen und die zusätzliche Temperaturerhöhung ausgewählt werden. Der Vorteil dieses Betriebsverfahrens besteht hauptsächlich darin, dass bestehende Anlagen durch einfache Umbauten bzw. simple Modifikationen der Steuerung bzw. Regelung für den erfindungsgemäßen Betrieb umgerüstet werden können.

Eine Ausführungsform bezieht sich auf eine Gebäudeheizvorrichtung mit mindestens einem permanenten, bezüglich des Ladegrades überwachten Wärmespeicher und einem aktivierbaren Heizkessel zum Erreichen eines vorgegebenen Ladegrades des permanenten Wärmespeichers. Es ist vorgesehen, dass eine Einstellung des von dem Heizkessel zu erreichenden Ladegrades des Wärmespeichers in Abhängigkeit einer gemessenen Außentemperatur erfolgt. Bislang war es in den meisten Fällen so, dass ein Ladegrad von 100 % erreicht werden sollte, sobald durch vorgewählte Betriebszustände der Heizkessel aktiviert wurde. Dieser hat dann solange geheizt, bis der volle Ladegrad erzielt war. Dies hat aber z.B. bei Heizungsanlagen mit integrierten Regenerativen Heizquellen den Nachteil, dass dann keine Speicherkapazität für zusätzliche Wärmeeinbringung vorhanden war. Solche Umstände konnten insbesondere in der Übergangszeit von Sommer auf Winter auftreten. Abhilfe schafft hier eine Veränderung des von dem Heizkessel zu erreichenden Ladegrades des Wärmespeichers in Abhängigkeit der Außentemperatur. Zum Beispiel müsste der Heizkessel bei einer Außentemperatur von -20°C immer einen Ladegrad von 100 % erreichen, wohingegen er bei 0°C nur 80 % des vollständigen Ladegrades erreichen müsste. Hier sind vielfältige Ausgestaltungen dieser Temperatursteuerung bzw. Regelung durch die Außentemperatur möglich.

Gemäß einer Variante ist vorgesehen, dass sich der Wert, des von dem Heizkessel zu erreichenden Ladegrades mit steigender Außentemperatur verringert. Eine solche Verringerung kann schrittweise oder auch stetig (bzw. dynamisch) erfolgen und sich entlang einer Ladegradkurve bewegen. Hier käme z.B. eine Gerade in Frage, die bei +20°C einen Ladegrad von 60 % und bei -20°C einen Ladegrad von 100 % fordert. Ein solches Verfahren führt sowohl zu längeren Laufzeiten als auch zu längeren Stillstandszeiten des Heizkessels, wodurch sich die Lebensdauer des Heizkessels erhöht. Des Weiteren wird durch die geringere Anzahl von Aktivierungen des Heizkessels der Schadstoffausstoß verringert. Bei der Verwendung von Heizungsanlagen mit Regenerativen Heizquellen kann der Wärmespeicher effektiver genutzt werden. Das führt z.B. bei Solarkollektoren an wärmeren Tagen zu einer besseren Solareinspeisung.

Eine Ausführungsform bezieht sich auf ein Verfahren für eine Gebäudeheizvorrichtung mit einem Vorlauf und Rücklauf aufweisenden Warmwasserheizkreislauf und im Heizkreislauf angeordneter Pumpe, wobei die Pumpendrehzahl in Abhängigkeit einer einzuhaltenden Temperaturdifferenz zwischen Vorlauf und Rücklauf eingestellt wird. Hierbei wird die für die Einstellung der Pumpendrehzahl in Betracht zu ziehende Temperaturdifferenz in Abhängigkeit der gemessenen Außentemperatur dynamisch verändert. Der Sinn besteht darin, eine Temperaturführung im Heizkreislauf zu bewirken, die optimal an die Außentemperaturverhältnisse angepasst sind. In aller Regel lässt sich z.B. bei der Verwendung von zusätzlichen Regenerativen Heizquellen eine Einspeisung von Wärme besser vornehmen, je niedriger die Rücklauftemperatur ist. Durch diese Temperaturführung der Pumpendrehzahl lässt sich dies berücksichtigen.

Insbesondere ist bei einer Variante vorgesehen, dass sich der Wert der für die Einstellung der Pumpendrehzahl in Betracht zu ziehenden Temperaturdifferenz mit steigender Außentemperatur verringert. Als Beispiel ist anzuführen, dass die Temperaturdifferenz bei -20°C Außentemperatur 15 Kelvin und bei +20°C Außentemperatur 5 Kelvin betragen kann. Aufgrund der Tatsache, dass die Vorlauftemperatur bei niedrigeren Außentemperaturen auch höher ist, wird also durch die Vergrößerung der Temperaturdifferenz zwischen Vorlauf und Rücklauf bei kälteren Außentemperaturen einer zusätzlichen Wärmeeinbringung, z.B. durch einen Solarkollektor, eine effektivere Möglichkeit gegeben. Bei üblicher konstanter Spreizung (unabhängig von der Außentemperatur) von Vorlauf und Rücklauf konnte es dazu kommen, dass die Umlaufwassermenge nicht sichergestellt war, da die Pumpendrehzahl auf einen zu niedrigen Wert geregelt wurde. Durch diese Steuerung bzw. Regelung ist auch mit einer Energieeinsparung bezüglich der Umwälzpumpe zu rechnen.

Eine Ausführungsform bezieht sich auf ein Verfahren für eine unter Berücksichtigung der Außentemperatur gesteuerten Gebäudeheizvorrichtung, wobei die Heizvorrichtung bei einer vorgewählten Ausschaltaußentemperatur ausschaltet und bei einer vorgewählten Einschaltaußentemperatur einschaltet. Hierzu ist vorgesehen, dass ab bzw. oberhalb einer vorbestimmten Ausschalttemperatur ein auf ein bestimmtes Temperaturniveau bezogener Wärmegewinn in Abhängigkeit der Außentemperatur ermittelt bzw. geschätzt wird, ab Erreichen bzw. unterhalb einer vorbestimmten Einschaltaußentemperatur eine auf ein bestimmtes Temperaturniveau bezogener Wärmeverlust in Abhängigkeit der Außentemperatur ermittelt bzw. geschätzt wird und innerhalb eines vorgegebenen Zeitraums der Wärmegewinn mit dem jeweils aktuellen Wärmeverlust gegengerechnet wird und das Einschalten der Gebäudeheizvorrichtung in Abhängigkeit eines vorgegebenen Differenzwerts von Wärmegewinn und Wärmeverlust verzögert bzw. vollständig unterdrückt wird.

Jede Gebäudeheizvorrichtung hat üblicherweise eine übergelagerte Ausschalttemperatur, bei der die Heizvorrichtung in den Sommerbetrieb übergeht und der Heizkessel nicht mehr eingeschaltet wird. Umgekehrt verfügt jede Heizungsanlage auch über eine Einschaltaußentemperatur, bei der die Heizungsanlage in den Winterbetrieb überwechselt und der Heizkessel wieder aktiviert wird. Probleme dieser Schaltvorgänge ergeben sich insbesondere in der Übergangszeit, wo es tagsüber durchaus sehr warm ist, aber nachts die Außentemperaturen stark absinken. Hierdurch kann sich dann die Heizungsanlage einschalten, obwohl dies tatsächlich noch gar nicht gewünscht ist. Hausbesitzer sind oft verwundert, dass insbesondere in der Übergangszeit trotz in der Heizungsanlage integrierter Regenerativer Heizquelle, z.B. Solarkollektor, ein Zuschalten des Heizkessels erfolgt. Der Grund liegt oftmals in dem gewünschten Komfortbedarf zur Beheizung nur bestimmter Räume, insbesondere des Badezimmers. Hier schafft die erwähnte Verfahrensvariante Abhilfe. Ein tagsüber vorhandener Überschuss an Wärme wird ermittelt bzw. geschätzt und z.B. bevorzugt in Kelvinminuten wiedergegeben. Hierzu könnte ein bestimmtes Temperaturniveau festgelegt werden und eine Integration des Temperaturverlaufs über die Zeit oberhalb dieses Temperaturniveaus vorgenommen werden. Hier geht man von einem fiktiven oder tatsächlichen Wärmegewinn aus, der das Gebäude von außen mit Wärme versorgt, da es im Inneren kälter ist. Diese zusätzlich in das Gebäude eingebrachte Wärme wird nunmehr berücksichtigt. Fällt z.B. im Laufe des Tages und insbesondere in der Nacht die Außentemperatur soweit ab, dass die Einschaltaußentemperatur erreicht ist, so führt das nicht sofort zum Einschalten der Anlage, sondern nunmehr werden ausgehend von einem bevorzugt niedrig liegenderen Temperatumiveau Wärmeverluste, ebenfalls in Kelvinminuten, ermittelt bzw. geschätzt. Auch hier kann wiederum die Integration des Temperaturverlaufs über die Zeit unterhalb des vorgewählten Temperaturniveaus erfolgen. Der Temperaturgewinn und der Temperaturverlust werden ständig miteinander gegengerechnet. Hierbei dient der Temperaturgewinn als fiktiver Speicherpuffer, der dann von dem Temperaturverlust aufgebraucht wird. In aller Regel muss der Wärmegewinn vollständig aufgebraucht werden, damit der Einschaltzeitpunkt erreicht ist, sofern die Außentemperatur immer noch unterhalb der Einschaltaußentemperatur liegt. Es lässt sich hieraus sehr einfach erkennen, dass insbesondere in der Übergangszeit ein Einschalten des Heizkessels unterdrückt wird, obwohl die festeingestellte Einschaltaußentemperatur bereits unterschritten wurde. Durch diese Steuerung bzw. Regelung wird der Einschaltzeitpunkt flexibel ausgestaltet und hängt von der Witterung bzw. des gesamten Temperaturverlaufes eines Tages oder mehrerer Tage ab. Als Beispiel seien hier angeführt: Ausschaltaußentemperatur = 20°C, Einschaltaußentemperatur = 17°C; Temperaturniveau für den Wärmegewinn = 25°C, Temperatumiveau für den Wärmeverlust = 17°C. Diese Werte sind entsprechend den Gegebenheiten einzustellen und können optimiert werden.

Eine weitere Variante sieht vor, dass dem auf ein bestimmtes Temperaturniveau bezogenen Wärmegewinn eine gebäudespezifische Wärmereserve zugerechnet wird. Insbesondere dann, wenn das Temperaturniveau für den Wärmegewinn und die Ausschaltaußentemperatur voneinander abweichen, lässt sich noch die gebäudespezifische Wärmereserve hinzurechnen. Diese Wärmereserve, die man auch als Speichervermögen des Gebäudetyps (Massivbau oder Leichtbau) bezeichnen kann, kann bei diesen Schaltvorgängen ebenfalls eine große Bedeutung zugemessen werden. Bevorzugt setzt sich der Wärmegewinn also aus mindestens zwei Bestandteilen zusammen, zum einen den ermittelten bzw. geschätzten Kelvinminuten oberhalb des gewählten Temperatumiveaus und zum anderen einer für den Gebäudetyp festgelegten Wärmereserve, z.B. 1000 Kelvinminuten.

Lässt man nunmehr diesen Wärmegewinn als Speicherwert bestehen, so könnte sich dieser insbesondere im Sommer mit der Zeit aufschaukeln. Deshalb ist gemäß einer weiteren Variante vorgesehen, dass der Wärmegewinn in vorbestimmten Zeitabschnitten auf einen Anfangswert zurückgesetzt wird. Insbesondere wird vorgeschlagen, diesen täglich oder alle zwei Tage wieder auf Null zu setzen. In diesem Zusammenhang sei angemerkt, dass es jederzeit möglich ist, hier noch verschiedene Schaltvarianten zu realisieren. Während der Heizkessel bei Erreichen der Ausschaltaußentemperatur abgeschaltet wird, kann die Heizungsanlage bis zu einer höheren Außentemperatur noch im Heizungsbetrieb laufen, aber nur auf der Basis von Regenerativen Heizquellen oder Überschussenergie aus dem Heizungspufferspeicher. Dies kann z.B. solange erfolgen, bis die Regenerative Heizquelle nichts mehr bringt bzw. eine gewisse Restwärmemenge im Pufferspeicher erhalten wird für die Erwärmung des Brauchwassers über einen Frischwasser-Wärmetauscher etc.

Des Weiteren bezieht sich die Erfindung auf eine Gebäudeheizvorrichtung, die nach einem Verfahren der Ansprüche 1 bis 11 betreibbar ist, mit mindestens einem Heizkessel, mindestens einem Wärmespeicher, mehreren im Gebäude angeordneten und jeweils einer Raumzone zugeordneten Heizkörpern, einer Regenerativen Heizquelle und einer Heizungssteuerung und/oder Regelung, durch die mindestens eine Raumzone einem Temperatursollwert zugeordnet ist. Die Einstellung des Temperatursollwertes kann entweder über Thermostatventile oder über Raumtemperaturregler erfolgen. Erfindungsgemäß ist die Heizungssteuerung und/oder Regelung derart ausgestaltet, dass sie in Abhängigkeit eines ausgewählten Betriebszustands mindestens eine Raumzone als Wärmespeicher aktiviert und den Temperatursollwert für die als Wärmespeicher aktivierte Raumzone automatisch erhöht und die Heizungssteuer- und/oder -regelung derart ausgebildet ist, dass der ausgewählte Betriebszustand zum Aktivieren der mindestens einen Raumzone als Wärmespeicher eine Wärmeüberproduktion der Kollektorquelle ist. Soweit ein permanenter Wärmespeicher verwendet wird, kann im Sinne der Erfindung auch ein Brauchwasserspeicher zum Einsatz kommen. Des Weiteren kann in diesem Zusammenhang auch ein Thermostatventil als Bestandteil der Steuerung bzw. Regelung angesehen werden.

Die Heizungssteuerung und/oder Regelung ist demnach in der Lage, zusätzliche Wärmespeicher, die durch Raumzonen des Gebäudes gebildet sind, zu aktivieren. Unter Raumzonen sind hier bevorzugt Räume des Gebäudes, z.B. Badezimmer, Kellervorraum, etc., gemeint.

Gemäß einer Ausführungsform weist jede als Wärmespeicher aktivierbare Raumzone einen Temperatursensor und eine automatische Stelleinrichtung für den oder die Heizkörper auf, die mit der Heizungssteuerung und/oder -regelung verbunden sind. Hierzu erfolgt eine zentrale Steuerung bzw. Regelung von möglichst einer Zentraleinheit aus, da die Heizkörper nicht mehr separat über Thermostatventile geregelt werden. Zur Übertragung der Daten aus den einzelnen Raumzonen an die Steuerung und/oder Regelung kann ein Bussystem verwendet werden und/oder eine drahtlose Übertragung erfolgen.

Günstigerweise kann gemäß einer weiteren Variante ein Außentemperatursensor, der mit der Heizungssteuerung und/oder -regelung wirkverbunden ist, ein Wärmespeicher mit Ladegradmesseinrichtung, die mit der Heizungssteuerung und/oder - regelung wirkverbunden ist, und ein aktivierbarer Heizkessel zum Erreichen eines vorgegebenen Ladegrads des Wärmespeichers vorgesehen sein, wobei die Heizungssteuerung und/oder -regelung derart ausgestaltet ist, dass der von dem aktivierbaren Heizkessel zu erreichende Ladegrad des Wärmespeichers in Abhängigkeit der gemessenen Außentemperatur festgelegt ist. Durch diese Anordnung ist eine Veränderung des Ladegrads in Abhängigkeit der gemessenen Außentemperatur mit den oben angegebenen Vorteilen möglich.

Die vorliegende Erfindung eignet sich auch sehr gut in Verbindung mit Kraft-Wärm-Kopplungsanlagen, hierzu werden insbesondere im Bereich der Ein -und Mehrfamiliengebäude Blockheizkraftwerke eingesetzt. Diese Anlagen dienen zum gleichzeitigen Erzeugen von Strom und Wärme. Bei einem Blockheizkraftwerk sind bevorzugt ein Motor, ein Generator und ein Wärmetauscher auf einem Rahmen montiert, die meist von einem gemeinsamen Gehäuse umgeben werden. Bereits auf dem Markt befindliche Seriengeräte weisen typischerweise eine elektrische Leistung bis zu 10 kW und eine thermische Leistung von bis zu 25 kW auf. Damit eignen sie sich für den Einsatz in kleineren Mehrfamilienhäusem, Schulen, Hotels, für kleine Verwaltungsgebäude, Gewerbebetriebe und andere Einrichtungen. Da Strom und Wärme dezentral dort erzeugt werden, wo sie auch genutzt werden, treten nur minimale Übertragungsverluste auf. Als Motor für ein BHKW können die verschiedensten Antriebskonzepte herangezogen werden. Im einfachsten Falle handelt es sich um Dieselmotoren. Neuerdings sind jedoch auch BHKWs mit Luft- oder Sterlingmotoren, die als Antriebsmedium auch Wasserstoff oder Helium einsetzen können, auf dem Markt. Moderne BHKWs können ihre Leistung modulieren, und zwar meist ohne größeren Wirkungsgradverlust und ohne größere Änderung des Schadstoffausstoßes. Bei Sterlingmotoren werden Brenner eingesetzt, die in unterschiedlicher Weise betrieben werden können (Öl, Gas, Biomasse, z.B. (Holz-) Pellettheizkessel). Auch bei BHKWs ist man bestrebt, ein Ein- und Ausschalten möglichst zu vermeiden. Im günstigsten Fall werden 4500 bis 5000 Betriebsstunden für ein BHKW pro Jahr angestrebt. Aufgrund der Tatsache, dass BHWKs bislang hinsichtlich ihres Ein- und Ausschaltverhaltens wärmegeführt waren, kam es aufgrund von mangelnder Aufnahmekapazität einer Gebäudeheizvorrichtung zu dem Ein- und Ausschalten. Nicht zuletzt aus diesem Grund sind BHKWs meist mit anderen Heizkesseln gekoppelt. Die durch die vorliegende Erfindung geschaffene Möglichkeit, zusätzlich Wärme, bei vorhandener Wärmeüberproduktion einzubringen, eröffnet auch die Möglichkeit, ein BHKW mit weniger Stillstandsphasen zu betreiben. Vorteilhaft bei solchen Anlagen ist sicherlicht auch, dass bei einer Stromüberproduktion eine Einspeisung in das öffentliche Stromnetz erfolgen kann. Dies kann nach Wirtschaftlichkeitskriterien erfolgen, um für den Betreiber die kostengünstigste Variante auszuwählen. Es besteht demnach auch hier die Möglichkeit, die Raum-Sollwert-Temperaturen über ein Raumbusmodul anzuheben, und zwar nur in diesen Räumen, welche als Energiespeicherräume freigegeben sind.

Eine Ausführungsform bezieht sich auf ein Verfahren für eine Gebäudeheizvorrichtung mit einem Blockheizkraftwerk und einem Vorlauf und Rücklauf aufweisenden Warmwasserkreislauf und einer in dem Heizkreislauf angeordneten Pumpe, wobei die Pumpendrehzahl in Abhängigkeit einer einzuhaltenden Temperaturdifferenz zwischen Vorlauf und Rücklauf eingestellt wird. Hierbei wird die für die Einstellung der Pumpendrehzahl in Betracht zu ziehende Temperaturdifferenz in Abhängigkeit vom Lastgang des Gebäudestromverbrauchs, insbesondere dynamisch, verändert, wobei der Strom- und Wärmebedarf des Gebäudes zumindest teilweise von dem Blockheizkraftwerk gedeckt werden. Günstigerweise kann bei einer weiteren Variante die Modulation der elektrischen und thermischen Leistung des Blockheizkraftwerks in diese Regelung miteinbezogen werden, um optimierte Strom- und Wärmeabnahmen zu erhalten.

Bei einem solchen Anwendungsfall wird z.B. der Lastgang des Strombedarfs/Spitzenstromleistung in eine dynamische Heizungsvorlaufs-Regelungsfunktion mit einfließen gelassen. Hierzu kann es sinnvoll sein, den Lastgang des Gebäudestromverbrauchs mit einzulesen. Aus den daraus entnommenen Werten könnte die Regelung in den "Stromtälern" die Heizungsvorlauftemperatur absenken (die Temperaturdifferenz erhöhen) und bei steigendem Strombedarf hochfahren (die Temperaturdifferenz wieder erniedrigen) und zu den Spitzenlast-Stromzeiten die Sollvorlauftemperatur über das normale Niveau, insbesondere sogar der Soll-Außentemperatur, anheben. Mit dieser optimierten Regelung ist auch eine Modulation des BHKW's z.B. im Leistungsbereich von 20 % - 100 % (oder noch niedriger als 20 %) möglich, und zwar nicht nur nach dem momentanen Wärmebedarf, sondern auch nach dem Stromlastgang des Gebäudes. Die Gebäudeheizvorrichtung ist demnach über einen viel größeren Zeitraum in der Lage, Wärme vom BHKW abzunehmen und in den Heizkreislauf einfließen zu lassen. Ziel dieser Regelung ist es demnach, dass das BHKW einen wesentlich größeren Anteil an der Gesamtwärmeversorgung des Gebäudes übernehmen kann. Ein häufiges Takten (d.h. Ein -und Ausschalten des BHKW's) wird somit verringert. Diese Regelung bietet weiter die Möglichkeit, das BHKW zu Stromspitzenzeiten im Volllastbetrieb zu fahren, so dass Strombezugsspitzen bei der Stromeinspeisung durch das Stromversorgungsuntemehmen stark verringert werden können, was sich auch auf den Leistungspreis auswirkt, der dadurch billiger wird. Bei herkömmlicher Regelung der Gebäudeheizvorrichtung tritt häufiger der Zustand auf, dass eine Wärmeeinspeisung durch das Blockheizkraftwerk nicht mehr weiter möglich ist und deshalb auch die daran gekoppelte Stromeinspeisung heruntergefahren werden muss, was sich wiederum negativ auf den Leistungspreis für den Strom auswirkt.

In diesem Zusammenhang besteht die Möglichkeit, den Lastgang des Gebäudestromverbrauchs über einen bestimmten Zeitabschnitt, z.B. zwei Wochen, zu beobachten und abzuspeichern, so dass Stromspitzenzeiten im Tagesverlauf und/oder Wochenverlauf (auch längere Zeiträume sind möglich) ermittelt werden und in der Folge davon, eine daran angepasste Regelung der Gebäudeheizvorrichtung einschließlich des Blockheizkraftwerks durchgeführt wird. Bevorzugt wird mit einiger Vorlaufzeit die Temperaturdifferenz zwischen Heizungsvorlauf und -rücklauf erhöht, so dass bei Erreichen der Stromspitzenzeit mehr Wärme in das Gebäude über das BHKW eingebracht werden kann. Selbstverständlich kann anstelle oder zusätzlich zur Regelung der Temperaturdifferenz von Heizungsvorlauf und -rücklauf eine erhöhte Wärmeeinspeisung in ausgewählte Raumzonen als Energiespeicher (Anspruch 1) erfolgen. Bei einer solchen Regelung kann der überwachte Zeitraum (bezüglich Stromlastgang) ständig mitgeführt werden, so dass eine jeweils an die aktuelle Situation angepasste Regelung erfolgt.

Im Folgenden werden Ausführungsbeispiele der vorliegenden Erfindung anhand einer Zeichnung näher erläutert. Es zeigen:
- Fig. 1: ein schematisches Schaltbild einer Gebäudeheizungsanlage,
- Fig. 2: eine schematische Querschnittsdarstellung eines Gebäudes mit integrierter Heizungsanlage ähnlich dem Schema aus Fig. 1,
- Fig. 3: eine Darstellung einer Heizkurve mit Vorlauf- und Rücklauftemperaturen im Heizkreis,
- Fig. 4: eine Darstellung einer Ladegradkurve eines Wärmespeichers, und
- Fig. 5: eine Temperaturkurve zur Darstellung der Sommer/Winterumschaltung einer Heizungsanlage.

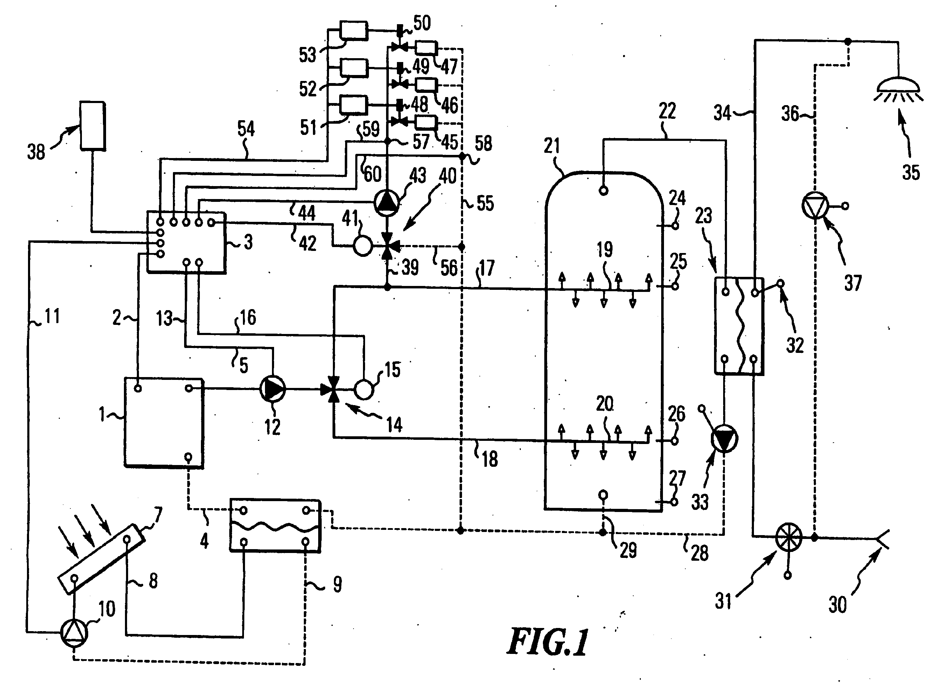

Die in Fig. 1 dargestellte Heizungsanlage stellt lediglich eine Übersicht über die gesamte Anlage dar. Auf die Darstellung einiger Verbindungen der Regelungseinheit zu einigen Sensoren bzw. Stellelementen wurde aus Gründen der Übersichtlichkeit verzichtet.

Die Heizungsanlage aus Fig. 1 umfasst einen Brennwertheizkessel 1, der eine Gasbefeuerung umfasst. Der Brennwertheizkessel 1 ist über eine elektrische Verbindung 2 mit der Steuerungs- und Regelungseinheit 3 verbunden. Des Weiteren weist der Heizkessel 1 eine Rücklaufleitung 4 und eine Vorlaufleitung 5 des Warmwasserheizkreislaufes auf. In der Rücklaufleitung 4 ist über einen Wärmetauscher 6 ein Solarkollektor 7 in den Heizkreislauf eingebunden. Der Solarkollektor 7 weist einen zum Wärmetauscher 6 führenden Vorlauf 8 und einen von dem Wärmetauscher 6 wegführenden Rücklauf 9 auf. In dem Rücklauf 9 ist eine Zirkulationspumpe 10 integriert. Diese steht über eine Steuerleitung 11 mit der Steuer- und Regelungseinheit 3 in Verbindung.

In dem Vorlauf 5 ist die Hauptheizkreislaufpumpe 12 angeordnet, die über eine Steuerleitung 13 mit der Steuer- und Regelungseinheit 3 in Verbindung steht. Von der Hauptpumpe 12 führt der Vorlauf 5 zu einem Ventil 14, das über eine Stelleinheit 15 und eine Steuerleitung 16 mit der Steuer- und Regelungseinheit 3 in Verbindung steht. Über das Ventil 14 wird zum einen Warmwasser in den oberen Leitungsabschnitt 17 oder den unteren Leitungsabschnitt 18 geleitet. Der obere Leitungsabschnitt 17 steht mit der Einspeislanze 19 und der untere Leitungsabschnitt 18 mit der Einspeislanze 20 eines Heizungspufferspeichers 21 in Verbindung. Über die Lanzen 19 und 20 kann das Wasser beruhigt ein- bzw. abströmen.

Der Pufferspeicher 21 weist an seinem oberen Abschnitt eine Ablaufleitung 22 auf, die zu einem Brauchwasserwärmetauscher 23 führt. Des Weiteren verfügt der Pufferspeicher 21 über vier in bestimmten Ebenen angeordnete Sensoren 24 bis 27, die jeweils die Temperatur an dieser Stelle im Pufferspeicher 21 messen und diese Messwerte an die Steuer- und Regelungseinheit 3 weitergeben. Aufgrund einer Mittelwertrechnung aus den von den Sensoren 24 bis 27 ermittelten Temperaturen lässt sich der Ladegrad des Pufferspeichers 21 ermitteln.

Von dem Brauchwasserwärmetauscher 23 führt ein Leitungsabschnitt 28 weg, der mit dem Rücklauf 4 in Verbindung steht. Von diesem zweigt auch eine Rücklaufleitung 29 zum Pufferspeicher 21 ab.

Der Brauchwasserkreislauf ist ebenfalls schematisch dargestellt. Über den Frischwasserzulauf 30 wird Frischwasser über einen Strömungsvolumenmesser 31 dem Brauchwasserwärmetauscher 23 zugeleitet. Über einen Sensor 32 wird die Wärme des abgegebenen Brauchwassers ermittelt. Sowohl Strömungsvolumenmesser 31, Sensor 32 als auch die Zirkulationspumpe 33 im Heizkreislauf stehen mit der Steuer- und Regelungseinheit 3 in Verbindung und speisen ihre Werte ein. Über die Leitung 34 wird warmes Brauchwasser den einzelnen Verbrauchern 35 zugeführt. Über eine Zirkulationsleitung 36 und eine Zirkulationspumpe 37 erfolgt eine teilweise Rückführung des Warmwassers. Die Zirkulationspumpe 37 steht ebenfalls mit der Steuer- und Regelungseinheit 3 in Verbindung.

Ein Außentemperatursensor 38 ist ebenfalls mit der Steuer- und Regelungseinheit 3 verbunden.

Im Folgenden wird nunmehr auf den eigentlichen, die Räume beheizenden Heizkreis näher eingegangen. Hierzu zweigt von der Leitung 17 ein Raumheizungsvorlauf 39 ab. In diesem Vorlauf 39 ist ein Mischventil 40 angeordnet, das über eine Stelleinrichtung 41 und die Steuerleitung 42 mit der Steuer- und Regelungseinheit 3 in Verbindung steht. Nachfolgend dem Mischventil 40 ist eine Pumpe 43 angeordnet, die über eine Leitungsverbindung 44 mit der Steuer- und Regelungseinheit 3 in Verbindung steht. Der Vorlauf 39 steht nunmehr mit mehreren Raumheizkörpern 45, 46 und 47 in Verbindung. Jeder Raumheizkörper 45-47 ist einer eigenen Raumzone bzw. einem eigenen Raum bzw. Zimmer zugeordnet. Jedem Heizkörper 45-47 ist ein motorverstellbares Heizkörperventil 48, 49, 50 vorgeschaltet. Die einzelnen Heizkörperventile 48, 49 und 50 stehen über Raumtemperaturmess- und Einstelleinrichtungen 51, 52, 53 und einer Busleitung 54 mit der Steuer- und Regelungseinheit 3 in Verbindung. Hierdurch lässt sich für jeden Raum ein eigener Temperatursollwert einstellen und überwachen. Über die Rücklaufleitung 55, die mit dem Rücklauf 4 in Verbindung steht, wird das rücklaufende Wasser zurückgeführt. Eine von der Rücklaufleitung 55 abzweigende Mischleitung 56, die mit dem Mischventil 40 in Verbindung steht, sorgt für einen Mischkreislauf. Sowohl in dem Vorlauf 39 als auch in dem Rücklauf 55 ist jeweils ein Temperatursensor 57, 58 angeordnet, die entsprechend über die zugeordnete Leitung 59 und 60 mit der Steuer- und Regelungseinheit 3 in Verbindung stehen. Der oben wiedergegebene schematisch Aufbau der Heizungsanlage soll nur als Beispiel verstanden sein, die Anzahl von Messpunkten, Raumheizkörpem (insgesamt oder pro Raumzone), Pumpen sowie Heizquellen lässt sich beliebig verändern und in ihrem Aufbau variieren.

Im Folgenden wird nunmehr die Wirkungs- und Funktionsweise der Heizungsanlage näher erläutert.

Geht man von einem Tag aus, bei dem über den Solarkollektor 7 ausreichend Wärme eingespeist werden kann, so erhöht der Solarkollektor 7 über den Wärmetauscher 6 die Rücklauftemperatur des Wassers im Heizkreislauf. Über die Hauptpumpe 12 wird dann das Wasser aus dem kältesten Bereich des Heizkreislaufs gefördert. Dies kann der Rücklauf aus dem Pufferspeicher 21 sein, der Rücklauf 28 aus der Brauchwassererwärmung oder der Rücklauf 55 aus dem Raumheizkreislauf sein.

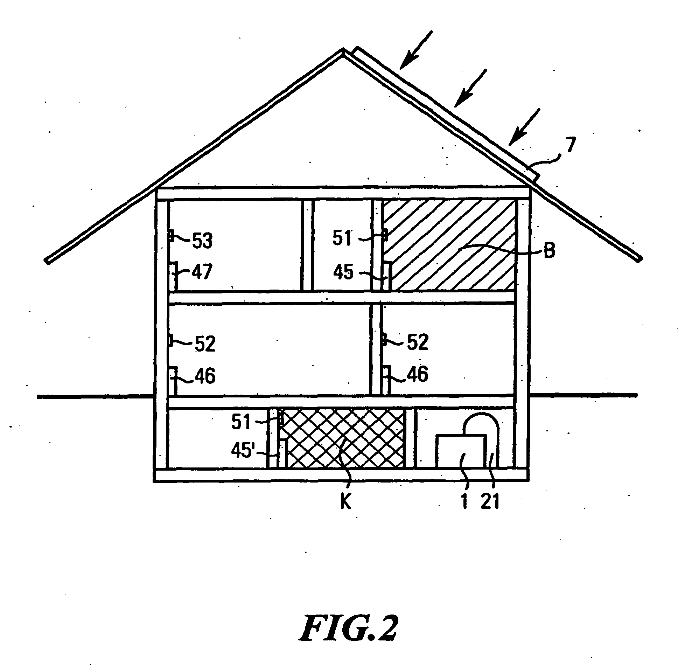

Reicht in einem zweiten Schritt die Solarwärme soweit aus, dass keine Entweder-Oder-Entscheidung getroffen werden muss, so wird über den Solarkollektor 7 der Vorlauf 39 vollständig versorgt und gleichzeitig Solarenergie in den Pufferspeicher 21 über die Schichtlanzen 19, 20 geleitet. Wird nunmehr durch die Steuer- und Regelungseinheit 3 ermittelt, dass sowohl sämtliche Temperatursollwerte in den einzelnen Räumen erreicht bzw. eingehalten werden als auch der Pufferspeicher 21 einen gewünschten Ladegrad (z.B. von 80 oder 100 %) erreicht hat, so definiert die Steuer- und Regelungseinheit 3 bei Erreichen dieses Schaltpunkts eine oder mehrere Raumzonen als Zusatzwärmespeicher. In der Fig. 2 ist es zuallererst der schraffierte obere Raum B rechts im ersten Stock, der z.B. das Badezimmer darstellt. Die Steuer- und Regelungseinheit 3 bestimmt nunmehr, dass der Sollwert für diesen Raum z.B. um 2°C angehoben wird. Überschüssige Wärme, die durch den Solarkollektor 7 erzeugt wird, wird nunmehr weiter genutzt, und in diesen Raum B eingeleitet. Ist in diesem Raum B die Temperaturerhöhung von 2°C erreicht worden, so kann ein weiterer Raum, z.B. der Kellervorraum K, als weiterer Wärmespeicher definiert werden. Auch hier wäre eine Erhöhung des Temperatursollwertes um 2°C denkbar. Selbstverständlich ist auch das gleichzeitige Speichern von Wärme in diesen beiden Räumen möglich. Anzahl der als Wärmespeicher definierten Räume sowie deren Temperaturerhöhung lassen sich beliebig variieren und durch eine gut programmierte Steuerung für die entsprechenden Einsatzzwecke abstimmen.

Sobald der Solarkollektor 7 keinen Wärmeüberschuss mehr produziert, wird der Temperatursollwert in diesen Räumen wieder auf den vorhergehenden Wert oder auf einen Nachtwert gesenkt. Die als Speicher verwendeten Räume B und K können sich dann über Nacht langsam wieder abkühlen und ihre Wärme an benachbarte Bereiche des Gebäudes abgeben. Hierdurch wird insgesamt Energie im Gebäude eingespeist. Bei einem Badezimmer kann dies dazu führen, dass selbst am nächsten Morgen noch eine angenehme, höhere Temperatur als bei üblicher Steuerung bzw. Regelung vorhanden ist.

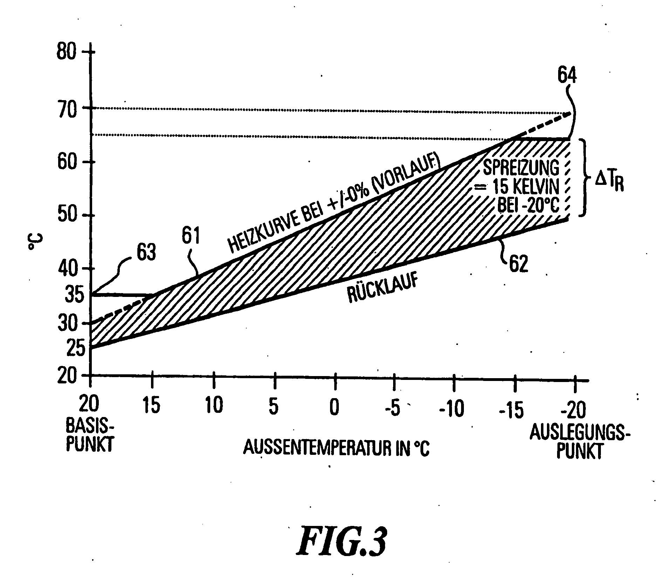

Fig. 3 zeigt nunmehr eine Heizkurve, bei der die obere Linie 61 die Temperatur im Vorlauf 39 darstellt, wie sie durch den Sensor 57 ermittelt wurde. Die untere Linie zeigt eine Temperaturkurve für den Rücklauf 55, wie sie durch den Sensor 58 festgestellt werden kann. Bei der dargestellten Heizung ist eine minimale Vorlauftemperatur 63 bei 35°C und eine maximale Vorlauftemperatur 64 bei 65°C eingestellt, weshalb die Heizkurve 61 jeweils im unteren und oberen Bereich einen Knick aufweist. Im Bereich von einer Außentemperatur von +15°C bis -15°C verläuft die Linie im Wesentlichen geradlinig und steigt mit sinkender Außentemperatur stetig an. Die Rücklauftemperatur 62 steigt von +25°C bei 20°C Außentemperatur auf +50°C bei -20°C Außentemperatur an. Hierdurch ergibt sich, dass die Spreizung Δ_{TR} (bzw. Differenz) bei kälteren Außentemperaturen größer ist, als bei niedrigeren Außentemperaturen. Die in Fig. 3 dargestellte Heizkurve wird nunmehr durch die Steuer- und Regelungseinheit 3 vorgegeben und entsprechend über die Steuerleitung 44 die Pumpendrehzahl der Pumpe 43 geregelt.

Der Vorteil dieser Temperaturführung besteht darin, dass durch die Absenkung des Temperaturniveaus im Rücklauf 55 es für den Solarkollektor 7 einfacher ist, Wärme in das System einzuspeisen (niedrigeres Temperaturniveau). Hierdurch wird die Effektivität des Solarkollektors, insbesondere bei kälteren Außentemperaturen, erhöht.

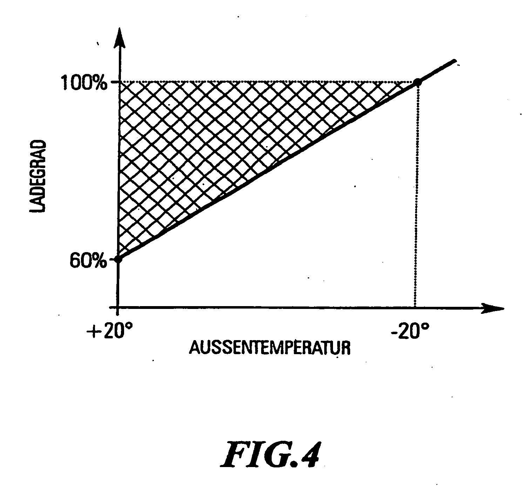

Fig. 4 zeigt eine Kurve, die den von dem Heizkessel angestrebten Ladegrad des Pufferspeichers 21 in Abhängigkeit der Außentemperatur wiedergibt. Anhand dieser Kurve ist zu erkennen, dass bei -20°C Außentemperatur ein Ladegrad von 100 % durch den Heizkessel 1 angestrebt wird. Das bedeutet, dass der Heizkessel 1, sobald dieser durch einen bestimmten Betriebszustand aktiviert wird, den Pufferspeicher 21 auf 100 % hochfährt. Der Ladegrad wird durch eine Mittelwertrechnung der durch die Sensoren 24-27 ermittelten Temperatur bestimmt. In den meisten Fällen wird, wenn sich der Mittelwert zu 60°C ergibt, von einem Ladegrad von 100 % ausgegangen. Anhand der Fig. 4 ist zu erkennen, dass die Kurve geradlinig verläuft und bei einer Außentemperatur von +20°C über den Heizkessel nur noch eine 60 %-ige Ladegradfüllung durch den Heizkessel 1 erreicht werden soll. Dies schafft ein erhebliches Speichervolumen für durch den Solarkollektor 7 erzeugte Wärme. Durch das niedrigere Temperaturniveau im Pufferspeicher 21 kann der Solarkollektor 7 auch effektiver Wärme in diesen hineinpumpen. Damit kann die Solarenergie insbesondere an warmen Tagen auch viel effektiver zur Speicherung herangezogen werden. Die Steuer- und Regelungseinheit 3 verändert den Wert stetig bzw. dynamisch entlang der in Fig. 4 dargestellten Kurve, so dass in Abhängigkeit der Außentemperatur immer ein für die Einspeisung von Solarenergie optimierter (durch den Heizkessel angestrebter) Ladegrad vorhanden ist. Der gezeigte Verlauf der Kurve in Fig. 4 ist nur exemplarisch und kann entsprechend den Gegebenheiten frei gewählt werden und z.B. treppenförmig ausgestaltet sein. Gleiches gilt auch für die Heizkurve aus Fig. 3.

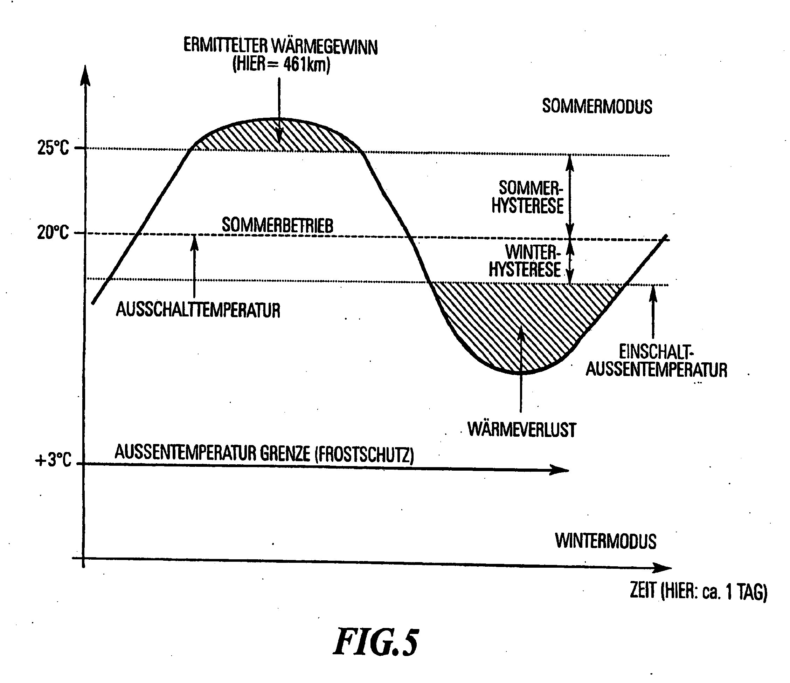

Eine weitere Besonderheit der Steuer- und Regelungseinheit 3 ergibt sich aus dem beispielhaften Verlauf der Kurve in Fig. 5.

Anhand dieser ist zu erkennen, dass die Heizungsanlage bei einer Temperaturmarke von 20°C Außentemperatur auf den Sommerbetrieb umschaltet, d.h. die Heizung schaltet aus. Wenn die Anlage derart in den Sommerbetriebsmodus gegangen ist, schaltet sie erst bei Erreichen der Temperaturmarke am Ende der Winterhysterese, also bei 17°C Außentemperatur, wieder ein.

Über die Steuer- und Regelungseinheit 3 ist auch eine Sommerhysterese definiert, deren oberer Wert 25°C Außentemperatur bildet. Der gezeigte Temperaturverlauf entspricht z.B. dem Temperaturverlauf an einem sonnigen Herbsttag. Wenn sich demnach die Anlage im Sommerbetrieb befindet und die Außentemperatur das Temperatumiveau von 25°C erreicht hat, werden die Temperaturwerte über diesem Temperatumiveau, also die Temperaturen über 25°C, in Kelvin-Minuten aufaddiert, die Temperaturkurve demnach oberhalb des Temperaturniveaus von 25°C integriert.

Hierdurch ergibt sich ein Wärmegewinn, der im gezeigten Beispiel der Fig. 5 mit 436 Kelvinminuten angegeben ist. Dieser Wert wird durch die Steuer- und Regelungseinheit 3 über die Außentemperaturmessung, gekoppelt mit einer Zeitmessung, errechnet. Sobald gegen Abend die Temperatur abfällt und den Einschalttemperaturwert bei 17°C Außentemperatur passiert, würde normalerweise die Heizungsanlage in den Winterbetrieb schalten (demnach einschalten). Allerdings wird nunmehr fortlaufend ein Wärmeverlust unterhalb von 17°C in Kelvin-Minuten aufaddiert (demnach die Kurve unterhalb des Temperaturniveaus von 17°C integriert) und von dem Wärmegewinn wieder abgezogen. Zusätzlich wird im vorliegenden Fall dem Gebäudetyp eine spezifische Speicherkapazität von 1000 Kelvin-Minuten zugerechnet. Diese 1000 Kelvinminuten werden mit dem ermittelten Wert zu einem Gesamtwärmegewinn addiert, so dass es insgesamt 1436 Kelvinminuten als fiktiver Speicher zur Verfügung stehen. Von diesem Wärmegewinn werden dann die Wärmeverluste abgezogen. Sofern sich dann im Laufe der Nacht kein negativer Wert ergibt, schaltet die Heizungsanlage nicht in den Wintermodus, sondern verbleibt im Sommermodus.

Aufgrund der Tatsache, dass der Wärmegewinn in einem Speicher der Steuer- und Regelungseinheit 3 hinterlegt wird, wird, damit sich die Werte (insbesondere im Sommer) nicht aufschaukeln, dieser Speicher alle 24 Stunden oder 48 Stunden etc. wieder gelöscht und die Berechnung beginnt dann von neuem.

Der Sinn dieser Schaltvorgänge besteht darin, dass in der Übergangszeit, wo es tagsüber sehr warm ist, aber nachts die Außentemperaturen stark absinken, nicht sofort wieder die Heizungsanlage einschaltet, wenn der Hausbesitzer dies noch gar nicht will. Und durch die zusätzliche Eingabemöglichkeit einer Wärmereserve kann man auch das Speichervermögen des Haustyps (Massivbau oder Leichtbau) noch stärker berücksichtigen.

Es ist auch jederzeit möglich, hier noch verschiedene Schaltvarianten zu realisieren, z.B. kann bei Erreichen des Sommerbetriebspunktes die Raumheizung (Heizungspumpe) weiterlaufen, aber nur auf der Basis des Solarkollektors 7 oder von Überschussenergie aus dem Heizungspufferspeicher 21, bis entweder die Solaranlage nichts mehr bringt bzw. eine gewisse Restwärme im Pufferspeicher 21 erhalten wird für die Erwärmung des Brauchwassers über einen Frischwasser-Wärmetauscher 23. Der Heizkessel 1 wird jedoch bei Erreichen des Der Heizkessel 1 wird jedoch bei Erreichen des Sommerbetriebspunktes ausgeschaltet und erst wieder bei Erreichen des unteren Ende der Winterhysterese (z.B. 17°C Außentemperatur) eingeschaltet (abzüglich eventueller Wärmegewinne ...).

Erst bei Erreichen des oberen Temperaturniveaus der Sommerhysterese (z.B. 25°C Außentemperatur) wird dann auch die Raumheizung ganz weggeschaltet.

Der Vorteil dieser Schaltungsvariante liegt in einer möglichst hohen Solarausnutzung.

Die zeitliche Verzögerung des Übergangs in den Winterbetrieb lässt sich auf unterschiedliche regelungstechnische Weise verwirklichen. Wichtig ist allerdings, dass Wärmegewinne, die insbesondere bei schönen Tagen zu verzeichnen sind, und auch das Speichervermögen des Gebäudes berücksichtigt werden. Eine einfache Absenkung der Einschalttemperatur würde den tatsächlichen Temperaturverlauf eines Tages nicht in dieser Weise berücksichtigen und teilweise zu schlechten Heizergebnissen führen.

Wenn z.B. der Solarkollektor oder eine andere Regenerative Energiequelle Überschussenergie produziert, kann man über die Steuerung auch die Heizungsvorlauftemperatur um einen bestimmten Wert, z.B. 5°C erhöhen, damit man eine höhere Abnahme dieser Wärmemenge hat. Denn ist bei reinen Witterungs- oder raumgeführten Vorlauftemperaturregelungen so, dass bei steigender Außentemperatur bzw. bei Erreichen der Raumsolltemperatur die Soll-Vorlauftemperatur auf einen sehr niedrigen Wert geregelt wird, d.h. der Mischer ist dann üblicherweise so weit zugefahren, dass nur sehr geringe Wärmemengen in den Heizkreislauf gepumpt werden können. Durch eine gezielte Vorlauftemperaturerhöhung bei anstehendem Energieüberschuss ist auch eine höhere Wärmeabnahme möglich. Wenn die Überschussproduktion beendet ist, geht die Steuerung wieder auf den normalen Vorlauf-Sollwert zurück.

Eine Überschussproduktion kann auch bei Verwendung eines Blockheizkraftwerks (BHKW) auftreten. Diese Regelung sorgt dann dafür, dass auch bei derartiger Überproduktion eine höhere Abnahme der Wärmemenge erfolgt. Die Steuerung kann nicht nur über die Außentemperatur, sondern auch oder zusätzlich über den Lastgang des Gebäudestromverbrauchs erfolgen, so dass ein BHKW zu Stromspitzenzeiten im Volllastbetrieb (oder erhöhten Lastbetrieb) gefahren werden kann und die Wärmemenge von der Gebäudeheizvorrichtung aufgenommen wird. Eine solche Regelung eignet sich insbesondere bezüglich bekannter Stromspitzenzeiten während eines Tagesverlaufs oder Wochenverlaufs. Bei unüblichen Stromspitzenzeiten oder Stromerhöhungszeiten kann auch die Anhebung der Raum-Sollwert-Temperaturen über ein Raumbusmodul und zwar nur in den Räumen, welche als Energiespeicherräume freigegeben sind, erfolgen.

## Patentansprüche

1. Betriebsverfahren für eine Gebäudeheizvorrichtung, die mindestens eine Heizquelle (1, 7), mindestens ein aktivierbares, Wärme abgebendes Heizelement (45, 46, 47) zum Erwärmen einer vorbestimmten Raumzone des Gebäudes und mindestens einen ersten Wärmespeicher (21) umfasst, wobei mindestens einer, mindestens einem Heizelement (45, 46, 47) zugeordneten Raumzone ein angestrebter Temperatursollwert über eine Temperatursteuer- und/oder -regelung (3) zugeordnet ist, **dadurch gekennzeichnet, dass** die Temperatursteuer- und/oder -regelung (3) bei Eintreten eines ausgewählten Betriebszustandes der Heizvorrichtung mindestens eine Raumzone (B, K) als zweiten Wärmespeicher aktiviert und eine Erhöhung des Temperatursollwerts für die als zweiten Wärmespeicher aktivierte Raumzone (B, K) vornimmt, dass der ausgewählte Betriebszustand zum Aktivieren der mindestens einen Raumzone (B, K) als Wärmespeicher eine Wärmeüberproduktion mindestens einer Heizquelle (7) ist, bei der in sämtlichen Raumzonen der eingestellte Temperatursollwert erreicht und/oder der erste Wärmespeicher (21) seinen kompletten Ladegrad erreicht hat, oder das Erreichen eine bestimmten Ladegrades des Wärmespeichers (21) ist oder das Erreichen bestimmter Außentemperaturen ist.

2. Verfahren nach Anspruch 1, **dadurch gekennzeichnet, dass** bei Wärmeüberproduktion zuerst permanente Wärmespeicher (21) beladen und anschließend die mindestens eine Raumzone (B, K) als Zusatzwärmespeicher aktiviert wird.

3. Verfahren nach Anspruch 1 oder 2, **dadurch gekennzeichnet, dass** bei Aktivierung der mindestens einen Raumzone (B,K) als Wärmespeicher die Vorlauftemperatur des mindestens einen Heizelementes (45,46,47) erhöht wird.

4. Verfahren nach einem der Ansprüche 1 bis 3 für eine Gebäudeheizvorrichtung, wobei der erste Wärmespeicher (21) ein permanent, bezüglich des Ladegrades überwachter Wärmespeicher (21)ist und ein aktivierbarer Heizkessel (1) zum Erreichen eines vorgegebenen Ladegrades des permanenten Wärmespeichers (21) vorgesehen ist, **dadurch gekennzeichnet, dass** eine Einstellung des von dem Heizkessel (1) zu erreichenden Ladegrades des Wärmespeichers (21) in Abhängigkeit einer gemessenen Außentemperatur erfolgt.

5. Verfahren nach Anspruch 4, **dadurch gekennzeichnet, dass** sich der Wert des von dem Heizkessel (1) zur erreichenden Ladegrades des Wärmespeichers (21) mit steigender Außentemperatur verringert.

6. Verfahren nach einem der Ansprüche 1 bis 5 für eine Gebäudeheizvorrichtung mit einem Vorlauf (39) und Rücklauf (55) aufweisenden Warmwasserheizkreislauf und im Heizkreislauf angeordneter Pumpe (43), wobei die Pumpendrehzahl in Abhängigkeit einer einzuhaltenden Temperaturdifferenz (Δ_{TR}) zwischen Vorlauf (39) und Rücklauf (55) eingestellt wird, **dadurch gekennzeichnet, dass** die für die Einstellung der Pumpendrehzahl in Betracht zu ziehende Temperaturdifferenz (Δ_{TR}) in Abhängigkeit einer gemessenen Außentemperatur verändert wird.

7. Verfahren nach Anspruch 6, **dadurch gekennzeichnet, dass** sich der Wert der für die Einstellung der Pumpendrehzahl in Betracht zu ziehenden Temperaturdifferenz (Δ_{TR}) mit steigender Außentemperatur verringert.

8. Verfahren nach einem der Ansprüche 1 bis 7 für eine unter Berücksichtigung der Außentemperatur gesteuerten Gebäudeheizvorrichtung, wobei die Heizvorrichtung bei einer vorgewählten Ausschaltaußentemperatur ausschaltet und bei einer vorgewählten Einschaltaußentemperatur einschaltet, **dadurch gekennzeichnet, dass** ab bzw. oberhalb einer vorbestimmten Ausschaltaußentemperatur ein auf ein bestimmtes Temperaturniveau bezogener Wärmegewinn in Abhängigkeit der Außentemperatur ermittelt bzw. geschätzt wird, ab Erreichen bzw. unterhalb einer Einschaltaußentemperatur ein auf ein bestimmtes Temperaturniveau bezogener Wärmeverlust in Abhängigkeit der Außentemperatur ermittelt bzw. geschätzt wird und innerhalb eines vorgegebenen Zeitraums der Wärmegewinn mit dem jeweils aktuellen Wärmeverlust gegengerechnet wird und das Einschalten der Gebäudeheizvorrichtung in Abhängigkeit eines vorgegebenen Differenzwerts von Wärmegewinn und Wärmeverlust verzögert bzw. vollständig unterdrückt wird.

9. Verfahren nach Anspruch 8, **dadurch gekennzeichnet, dass** dem auf ein bestimmtes Temperaturniveau bezogener Wärmegewinn eine gebäudespezifische Wärmereserve hinzugerechnet wird.

10. Verfahren nach Anspruch 8 oder 9, **dadurch gekennzeichnet, dass** der Wärmegewinn in vorbestimmten Zeitabschnitten auf einen Anfangswert zurückgesetzt wird.

11. Gebäudeheizvorrichtung, die nach einem Verfahren der Ansprüche 1 bis 10 betreibbar ist, mit mindestens einer Heizquelle (1, 7), mindestens einem ersten Wärmespeicher (21), mehreren im Gebäude angeordneten und jeweils einer Raumzone zugeordneten Heizkörpern (45, 46, 47) und einer Heizungssteuer- und/oder - regelung (3), durch die mindestens einer Raumzone ein Temperatursollwert zugeordnet ist, **dadurch gekennzeichnet, dass** die Heizungssteuer- und/oder -regelung derart ausgestaltet ist, dass sie in Abhängigkeit eines ausgewählten Betriebszustands der Heizvorrichtung mindestens eine Raumzone (B, K) als zweiten Wärmespeicher aktiviert und den Temperatursollwert für diese als zweiten Wärmespeicher aktivierte Raumzone (B, K) automatisch erhöht, und dass der ausgewählte Betriebszustand zum Aktivieren der mindestens einen Raumzone (B, K) als Wärmespeicher eine Wärmeüberproduktion mindestens einer Heizquelle (7) ist, bei der in sämtlichen Raumzonen der eingestellte Temperatursollwert erreicht und/oder der erste Wärmespeicher (21) seinen kompletten Ladegrad erreicht hat, oder das Erreichen eine bestimmten Ladegrades des Wärmespeichers (21) ist oder das Erreichen bestimmter Außentemperaturen ist.

12. Vorrichtung nach Anspruch 11, **dadurch gekennzeichnet, dass** jede als Wärmespeicher aktivierbare Raumzone (B, K) einen Temperatursensor (51) und eine automatische Stelleinrichtung (48) für den oder die Heizkörper (45) aufweist, die mit der Heizungssteuer- und/oder -regelung wirkverbunden sind.

13. Vorrichtung nach Anspruch 12 oder 13, **dadurch gekennzeichnet, dass** der erste Wärmespeicher (21) als Wärmespeicher (21) mit Ladegradmesseinrichtung, die mit der Heizungssteuer- und/oder -regelung wirkverbunden ist, ausgestaltet ist, und dass ein Außentemperatursensor (38), der mit der Heizungssteuer- bzw. -regelung wirkverbunden ist, und ein aktivierbarer Heizkessel (1) zum Erreichen eines vorgegebenen Ladegrades des Wärmespeichers (21) vorgesehen sind, wobei die Heizungssteuer- und/oder -regelung derart ausgestaltet ist, dass der von dem aktivierbaren Heizkessel (1) zu erreichende Ladegrad in Abhängigkeit der gemessenen Außentemperatur festgelegt ist.

14. Verfahren nach einem der Ansprüche 1 bis 10 für eine Gebäudeheizvorrichtung mit einem Blockheizkraftwerk und einem Vorlauf (39) und Rücklauf (55) aufweisenden Warmwasserheizkreislauf und im Heizkreislauf angeordneter Pumpe (43), wobei die Pumpendrehzahl in Abhängigkeit einer einzuhaltenden Temperaturdifferenz (Δ_{TR}) zwischen Vorlauf (39) und Rücklauf (55) eingestellt wird, **dadurch gekennzeichnet, dass** die für die Einstellung der Pumpendrehzahl in Betracht zu ziehende Temperaturdifferenz (Δ_{TR}) in Abhängigkeit vom Lastgang des Gebäudestromverbrauch verändert wird, wobei der Strombedarf und Wärmebedarf des Gebäudes zumindest teilweise von dem Blockheizkraftwerk gedeckt werden.

## Claims

1. Control method for a building heating apparatus which comprises at least one heat source (1, 7), at least one heating element (45, 46, 47) which emits heat and can be activated, in order to heat a predetermined room zone of the building, and has at least one first heat store (21), with at least one room zone which is associated with at least one heating element (45, 46, 47) being allocated a desired temperature nominal value via a closed-loop and/or open-loop temperature control system (3), **characterized in that** the open-loop and/or closed-loop temperature control system (3) activates at least one room zone (B, K) as a second heat store when the heating apparatus enters a selected operating state, and increases the temperature nominal value for the room zone (B, K) which is activated as the second heat store, **in that** the selected operating state for activation of the at least one room zone (B, K) as a heat store is heat overproduction of at least one heat source (7), in which the selected temperature nominal value is reached in all the room zones and/or the first heat store (21) has reached its complete charge level, or is the reaching of a specific charge level of the heat store (21), or the reaching of specific outside temperatures.

2. Method according to Claim 1, **characterized in that**, in the case of heat overproduction, permanent heat stores (21) are charged first, and the at least one room zone (B, K) is then activated as an additional heat store.

3. Method according to Claim 1 or 2, **characterized in that** the forward-path temperature of the at least one heating element (45, 46, 47) is increased on activation of the at least one room zone (B, K) as a heat store.

4. Method according to one of Claims 1 to 3 for a building heating apparatus, with the first heat store (21) being a heat store (21) whose charge level is permanently monitored, and with a heating boiler (1) which can be activated being provided for the permanent heat store (21) to reach a predetermined charge level, **characterized in that** the charge level of the heat store (21) to be reached by the heating boiler (1) is set as a function of a measured outside temperature.

5. Method according to Claim 4, **characterized in that** the value of the charge level of the heat store (21) to be reached by the heating boiler (1) decreases as the outside temperature rises.

6. Method according to one of Claims 1 to 5 for a building heating apparatus having a hot water heating circuit which has a forward path (39) and a return path (55) and having a pump (43) arranged in the heating circuit, with the pump rotation speed being set as a function of a temperature difference (Δ_{TR}) to be maintained between the forward path (39) and the return path (55), **characterized in that** the temperature difference (Δ_{TR}) to be considered for setting the pump rotation speed is varied as a function of a measured outside temperature.

7. Method according to Claim 6, **characterized in that** the value of the temperature difference (Δ_{TR}) to be considered for setting the pump rotation speed decreases as the outside temperature rises.

8. Method according to one of Claims 1 to 7 for a building heating apparatus which is controlled taking into account the outside temperature, with the heating apparatus being switched off at a predetermined switch-off outside temperature and being switched on at a preselected switch-on outside temperature, **characterized in that**, from or above a predetermined switch-off outside temperature, a heat gain with respect to a specific temperature level is determined or estimated as a function of the outside temperature, from reaching or below a switch-on outside temperature, a heat loss with respect to a specific temperature level is determined or estimated as a function of the outside temperature, and within a predetermined time period, the heat gain is calculated back using the respective current heat loss, and the switching on of the building heating apparatus is delayed or completely prevented as a function of a predetermined difference value between the heat gain and the heat lost.

9. Method according to Claim 8, **characterized in that** a building-specific heat reserve is added to a heat gain with respect to a specific temperature level.

10. Method according to Claim 8 or 9, **characterized in that** the heat gain is reset to an initial value at predetermined time intervals.

11. Building heating apparatus which can be operated using a method from Claims 1 to 10, having at least one heat source (1, 7), at least one first heat store (21) a plurality of radiators (45, 46, 47) which are arranged in the building and are each associated with one room zone, and having an open-loop and/or closed-loop heating control system (3), by means of which at least one room zone is allocated a temperature nominal value, **characterized in that** the open-loop and/or closed-loop heating control system is designed such that it activates at least one room zone (B, K) as a second heat store as a function of a selected operating state of the heating apparatus, and automatically increases the temperature nominal value for this room zone (B, K) which is activated as the second heat store, and **in that** the selected operating state for activation of the at least one room zone (B, K) as a heat store is heat overproduction of at least one heat source (7), in which the selected temperature nominal value is reached in all the room zones and/or the first heat store (21) has reached its complete charge level or is the reaching of a specific charge level of the heat store (21), or is the reaching of specific outside temperatures.

12. Apparatus according to Claim 11, **characterized in that** each room zone (B, K) which can be activated as a heat store has a temperature sensor (51) and an automatic actuating device (48) for the radiator or radiators (45), which are operatively connected to the open-loop and/or closed-loop heating control system.

13. Apparatus according to Claim 12 or 13, **characterized in that** the first heat store (21) is in the form of a heat store (21) with a charge level measurement device which is operatively connected to the open-loop and/or closed-loop heating control system and **in that** an outside temperature sensor (38), which is operatively connected to the open-loop or closed-loop heating control system, and a heating boiler (1) which can be activated are provided in order to reach a predetermined charge level in the heat store (21), with the open-loop and/or closed-loop heating control system being designed such that the charge level to be reached by the heating boiler (1) which can be activated is defined as a function of the measured outside temperature.

14. Method according to one of Claims 1 to 10 for a building heating apparatus, having a combined heat and power plant and a hot water heating circuit which has a forward path (39) and a return path (55), and having a pump (43) arranged in the heating circuit, with the pump rotation speed being set as a function of a temperature difference (Δ_{TR}) to be maintained between the forward path (39) and the return path (55), **characterized in that** the temperature difference (Δ_{TR}) to be considered for setting the pump rotation speed is varied as a function of the load response of the building electricity consumption, with the electricity requirement and the heat requirement for the building being at least partially covered by the combined heat and power plant.

## Revendications

1. Procédé de fonctionnement pour une installation de chauffage d'un bâtiment qui comprend au moins une source de chauffage (1, 7), au moins un élément de chauffage (45, 46, 47) qui est apte à être activé, qui dégage de la chaleur et qui est destiné à chauffer une zone de pièces prédéfinie du bâtiment, et au moins un premier accumulateur de chaleur (21), étant précisé qu'une valeur de température théorique visée est associée par l'intermédiaire d'une commande et/ou d'une régulation de température (3) à au moins une zone de pièces associée à au moins un élément de chauffage (45, 46, 47), **caractérisé en ce que** la commande et/ou la régulation de température (3), lors de l'apparition d'un état de fonctionnement sélectionné de l'installation de chauffage, activent au moins une zone de pièces (B, K) comme second accumulateur de chaleur et provoque une augmentation de la valeur de température théorique pour la zone (B, K) activée comme second accumulateur de chaleur, et **en ce que** l'état de fonctionnement sélectionné pour activer la ou les zones de pièces (B, K) comme accumulateurs de chaleur est constitué par une surproduction de chaleur d'au moins une source de chaleur (7), avec laquelle la valeur de température théorique réglée est atteinte dans toutes les zones et/ou le premier accumulateur de chaleur (21) a atteint son degré de charge complet, ou est constitué par le fait qu'un degré de charge défini de l'accumulateur de chaleur (21) est atteint ou par le fait que des températures extérieures définies sont atteintes.

2. Procédé selon la revendication 1, **caractérisé en ce que** dans le cas d'une surproduction de chaleur, des accumulateurs de chaleur permanents (21) sont tout d'abord chargés puis la ou les zones de pièces (B, K) sont activées comme accumulateurs de chaleur supplémentaires.

3. Procédé selon la revendication 1 ou 2,
**caractérisé en ce que** lors de l'activation de la ou des zones (B, K) comme accumulateurs de chaleur, cela augmente la température aller dudit élément de chauffage (45, 46, 47).

4. Procédé selon l'une des revendications 1 à 3 pour une installation de chauffage de bâtiment, selon lequel le premier accumulateur de chaleur (21) est un accumulateur permanent (21) dont le degré de charge est surveillé, et il est prévu une chaudière activable (1) pour atteindre un degré de charge prédéfini de l'accumulateur de chaleur permanent (21), **caractérisé en ce qu'**un réglage du degré de charge de l'accumulateur de chaleur (21) qui doit être atteint par la chaudière (1) a lieu en fonction d'une température extérieure mesurée.

5. Procédé selon la revendication 4, **caractérisé en ce que** la valeur du degré de charge de l'accumulateur de chaleur (21) qui doit être atteinte par la chaudière (1) diminue quand la température extérieure augmente.

6. Procédé selon l'une des revendications 1 à 5 pour une installation de chauffage de bâtiment avec un circuit de chauffage à eau chaude comprenant une canalisation montante (39) et une canalisation descendante (55), et une pompe (43) disposée dans le circuit de chauffage, la vitesse de rotation de la pompe étant réglée en fonction d'une différence de température à respecter (Δ_{TR}) entre la canalisation montante (39) et la canalisation descendante (55), **caractérisé en ce que** la différence de température (Δ_{TR}) à prendre en considération pour le réglage de la vitesse de rotation de la pompe est modifiée en fonction d'une température extérieure mesurée.

7. Procédé selon la revendication 6, **caractérisé en ce que** la valeur de la différence de température (Δ_{TR}) à prendre en considération pour le réglage de la vitesse de rotation de la pompe diminue quand la température extérieure augmente.

8. Procédé selon l'une des revendications 1 à 7 pour une installation de chauffage de bâtiment qui est commandée compte tenu de la température extérieure, l'installation de chauffage s'arrêtant en présence d'une température extérieure d'arrêt choisie préalablement et se mettant en marche en présence d'une température extérieure de mise en marche choisie préalablement, **caractérisé en ce qu'**à partir ou au-dessus d'une température extérieure d'arrêt prédéfinie, un gain de chaleur par rapport à un niveau de température défini est déterminé ou évalué en fonction de la température extérieure tandis qu'à partir ou au-dessous d'une température extérieure de mise en marche, une perte de chaleur par rapport à un niveau de température défini est déterminée ou évaluée en fonction de la température extérieure, et qu'à l'intérieur d'un laps de temps prédéfini, le gain de chaleur est comparé à la perte de chaleur actuelle, et la mise en marche de l'installation de chauffage du bâtiment est retardée ou complètement empêchée en fonction d'une valeur différentielle prédéfinie du gain et de la perte de chaleur.

9. Procédé selon la revendication 8, **caractérisé en ce qu'**on ajoute au gain de chaleur par rapport à un niveau de température défini une réserve de chaleur propre au bâtiment.

10. Procédé selon la revendication 8 ou 9,
**caractérisé en ce que** le gain de chaleur est ramené à intervalles prédéfinis à une valeur initiale.

11. Installation de chauffage de bâtiment qui est apte à fonctionner selon un procédé des revendications 1 à 10, avec au moins une source de chauffage (1, 7), au moins un premier accumulateur de chaleur (21), plusieurs corps de chauffe (45, 46, 47) disposés dans le bâtiment et associés chacun à une zone de pièces, et une commande et/ou régulation de chauffage (3) grâce à laquelle une valeur de température théorique est associée à au moins une zone, **caractérisée en ce que** la commande et/ou la régulation de chauffage est conçue pour activer au moins une zone de pièces (B, K) comme second accumulateur de chaleur en fonction d'un état de fonctionnement sélectionné de l'installation de chauffage et pour augmenter automatiquement la valeur de température théorique pour cette zone (B, K) activée comme second accumulateur de chaleur, et **en ce que** l'état de fonctionnement sélectionné pour activer la ou les zones (B, K) comme accumulateurs de chaleur est constitué par une surproduction de chaleur d'au moins une source de chauffage (7), avec laquelle la valeur de température théorique réglée est atteinte dans toutes les zones et/ou le premier accumulateur de chaleur (21) a atteint son degré de charge complet, ou est constitué par le fait qu'un degré de charge défini de l'accumulateur de chaleur (21) est atteint, ou par le fait que des températures extérieures définies sont atteintes.

12. Dispositif selon la revendication 11, **caractérisé en ce que** chaque zone de pièces (B, K) activable comme accumulateur de chaleur comporte un capteur de température (51) et un dispositif de réglage automatique (48), pour le ou les corps de chauffe (45), qui sont reliés à la commande et/ou à la régulation de chauffage.

13. Dispositif selon la revendication 12 ou 13,
**caractérisé en ce que** le premier accumulateur de chaleur (21) est conçu comme un accumulateur de chaleur (21) avec un dispositif de mesure de degré de charge qui est en relation fonctionnelle avec la commande et/ou la régulation de chauffage, et **en ce qu'**il est prévu un capteur de température extérieure (38) qui est en relation fonctionnelle avec la commande ou la régulation de chauffage, et une chaudière activable (1) pour atteindre un degré de charge prédéfini de l'accumulateur de chaleur (21), la commande et/ou la régulation de chauffage étant conçues pour que le degré de charge que la chaudière activable (1) doit atteindre soit fixé en fonction de la température extérieure mesurée.

14. Procédé selon l'une des revendications 1 à 10 pour une installation de chauffage de bâtiment avec une centrale de chauffage à distance, un circuit de chauffage à eau chaude qui comporte une canalisation montante (39) et une canalisation descendante (55), et une pompe (43) qui est disposée dans le circuit de chauffage, la vitesse de rotation de la pompe étant réglée en fonction d'une différence de température à respecter (Δ_{TR}) entre la canalisation montante (39) et la canalisation descendante (55), **caractérisé en ce que** la différence de température (Δ_{TR}) à prendre en considération pour le réglage de la vitesse de rotation de la pompe est modifiée en fonction de la consommation de courant du bâtiment, le besoin en courant et le besoin en chaleur pour le bâtiment étant au moins partiellement couverts par ladite centrale thermique.
